# EUROPEAN PATENT APPLICATION

(11) **EP 4 819 460 A1**
(43) Date of publication of application: **07.10.2026**
(21) Application number: 26162259.1
(22) Date of filing: 04.03.2026
(51) Int. Cl.: H02K 17/14, H02K 19/12, E02F 9/20

(54) **DRIVE SYSTEM OF WORKING MACHINE**

(30) Priority: 03.04.2025 JP 2025061856
(71) Applicant: NABTESCO CORPORATION, Chiyoda-ku Tokyo 102-0093 (JP)
(72) Inventor: Inada, Taro, Tokyo 102-0093 (JP)
(74) Representative: Grünecker Patent- und Rechtsanwälte PartG mbB

(57) **Abstract**

It is desired to provide a working machine with improved work efficiency and power efficiency. A drive system of the working machine includes a rotating member configured to rotate relative to a connection portion; and an electric motor configured as a power source for the rotating member. The electric motor has a plurality of windings connected to an AC power source, and the drive system includes a switching circuit configured to switch a connection state of the windings between a first connection state and a second connection state in which the electric motor rotates at lower torque and higher rotational speed than in the first connection state.

## Description

### CROSS-REFERENCE TO RELATED APPLICATIONS

This application is based on and claims the benefit of priority from Japanese Patent Application Serial No. 2025-061856 (filed on April 3, 2025), the contents of which are hereby incorporated by reference in their entirety.

### TECHNICAL FIELD

The present disclosure relates to a drive system of a working machine.

### BACKGROUND

Japanese Patent Application Publication No. 2015-158081 discloses a working machine including an electric motor configured to cause a revolving body to revolve. For this type of working machine, the electric motor is required to output high torque. On the other hand, the electric motor is also required to output high rotational speed in order that the working machine can quickly complete work. However, it is difficult for a single electric motor to achieve high power efficiency both in the high torque and high rotational speed ranges. In other words, achieving high power efficiency across both high torque and high rotational speed ranges necessitates the use of multiple electric motors with distinct characteristics.

### SUMMARY

For a working machine, there is a need to improve the work efficiency and power efficiency.

An aspect of the present disclosure provides a drive system of a working machine. The drive system includes: a rotating member configured to rotate relative to a connection portion; and an electric motor configured as a source of power for the rotating member. The electric motor has a plurality of windings connected to an AC power source, and the drive system includes a switching circuit configured to switch a connection state of the windings between a first connection state and a second connection state in which the electric motor rotates at lower torque and higher rotational speed than in the first connection state.

According to the above configuration, the electric motor can be switched by the switching circuit between the first connection state where the electric motor operates in the high torque range and the second connection state where the electric motor operates in the high rotational speed range. Thus, the electric motor provides an expanded high-power-efficiency region in its rotational speed-torque characteristics. Thus, the working machine can achieve improved work efficiency while accomplishing improved power efficiency.

In the drive system of a working machine, each of the windings may have: a first end connected to the AC power source; a second end opposite the first end; and an intermediate point between the first and second ends, and the switching circuit may be switchable between (i) the first connection state in which the intermediate points of the windings are disconnected from each other and the second ends of the windings are connected to each other and (ii) the second connection state in which the intermediate points of the windings are connected to each other.

In the drive system of a working machine, a rotatable range of the rotating member about the connection portion may be 180 degrees or more. The drive system of a working machine may include a main body; a boom rotatably connected to the main body; an arm rotatably connected to the boom; and an attachment rotatably connected to the arm. The rotating member may be one rotatable member selected from the boom, the arm, and the attachment.

The drive system of a working machine may include a lower body having a traveling unit; and an upper body rotatably connected to the lower body. The rotating member may be the upper body. The drive system of a working machine may include a changeover switch configured to be operable by an operator of the working machine; and a control device configured to switch the switching circuit between the first connection state and the second connection state, based on how the changeover switch is operated.

The drive system of a working machine may include a control device configured to switch the switching circuit to (i) the first connection state if torque of the electric motor is no less than a predetermined specified value and (ii) the second connection state if the torque of the electric motor is less than the specified value.

The drive system of a working machine may include a control device configured to switch the switching circuit to (i) the second connection state if rotational speed of the electric motor is no less than a predetermined specified rotational speed and (ii) the first connection state if the rotational speed of the electric motor is less than the specified rotational speed.

In the drive system of a working machine, the rotating member may be the boom, and the drive system may include a control device configured to switch the switching circuit to (i) the first connection state if an angle of the boom relative to a ground surface is less than a specified angle and (ii) the second connection state if the angle of the boom relative to the ground surface is no less than the specified angle.

The drive system of a working machine may include a control device configured to keep the switching circuit in the first connection state until the rotating member rotates through a predetermined specified angle from a stationary state.

The drive system of a working machine may include a converter circuit configured to output AC power to the electric motor; and a cooling device configured to cool the converter circuit.

### ADVANTAGEOUS EFFECTS

According to the above configuration, the working machine can achieve improved work efficiency while accomplishing improved power efficiency.

### BRIEF DESCRIPTION OF THE DRAWINGS

Fig. 1 is a side view of a working machine relating to an embodiment.
Fig. 2 is a top view of the working machine.
Fig. 3 is a side view showing the configuration of a traveling unit of the working machine and a movable range of a working member.
Fig. 4 shows the electrical configuration and power transmission paths of the drive system of the working machine.
Fig. 5 is a circuit diagram illustrating the circuit configuration of an electric motor.
Fig. 6 is a graph showing the rotational speed-torque characteristics of the electric motor.
Fig. 7 is a circuit diagram illustrating the circuit configuration of an electric motor relating to a modification example.
Fig. 8 is a circuit diagram illustrating the circuit configuration of an electric motor relating to a modification example.

### DESCRIPTION OF THE PREFERRED EMBODIMENTS

The following now describes embodiments of a drive system of a working machine of the present disclosure with reference to the appended drawings. For simplicity and clarity of the description, the constituent elements shown in the drawings are not necessarily drawn to a fixed scale. The accompanying drawings are merely illustrative of the embodiments of the present disclosure and should not be considered as limitative.

The following detailed description encompasses apparatuses, systems, and methods embodying illustrative embodiments of the present disclosure. The detailed description is merely exemplary in nature and is not intended to limit the embodiments of the disclosure or their application and uses.

### <Embodiments>

### [Drive System of Working Machine]

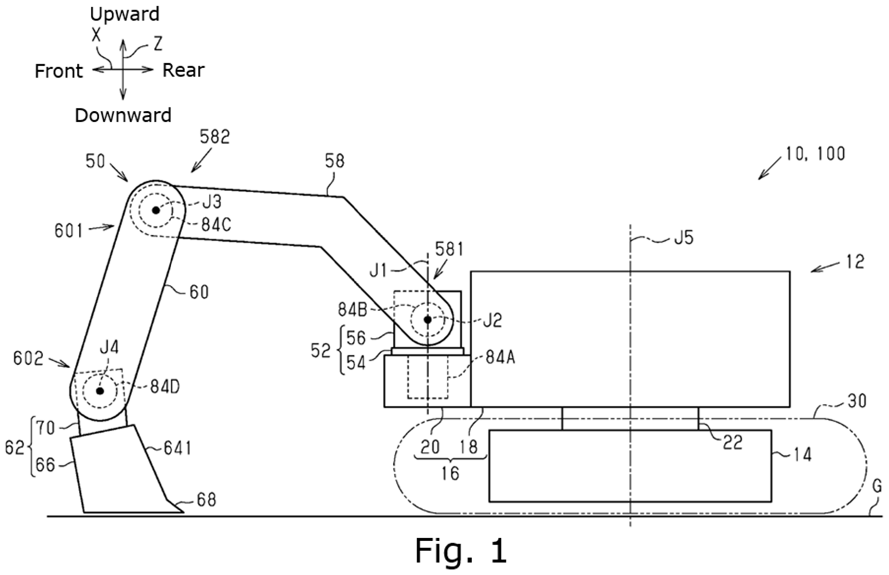

A drive system 100 of a working machine will now be described with reference to Figs. 1 to 6. The following first describes an excavator 10, which is an example of the working machine to which the drive system 100 is applied.

As shown in Fig. 1, the excavator 10 includes a main body 12 and a working member 50. The main body 12 constitutes the vehicle body of the excavator 10. The main body 12 includes a lower body 14 and an upper body 16. The upper body 16 is located on the opposite side to the ground surface G with respect to the lower body 14. In the present embodiment, the term "upward direction" refers to the direction in which the upper body 16 is located when viewed from the lower body 14, and the term "downward direction" refers to the opposite direction. A specific one of the directions orthogonal to the upward direction is the frontward direction, and the opposite direction is the rearward direction. Furthermore, the direction that is orthogonal to both of the upward and frontward directions faces the left and right directions, which are opposite to each other. The frontward and rearward directions may be collectively referred to as the X direction. The left and right directions may be collectively referred to as Y direction. The upward and downward directions may be collectively referred to as the Z direction.

The lower body 14 has a rectangular parallelepiped shape, for example. The upper body 16 includes a casing main portion 18 and a casing front portion 20. The casing main portion 18 has a rectangular parallelepiped shape, for example. The interior of the casing main portion 18 is a hollow housing space. The housing space accommodates the various devices used to operate the excavator 10.

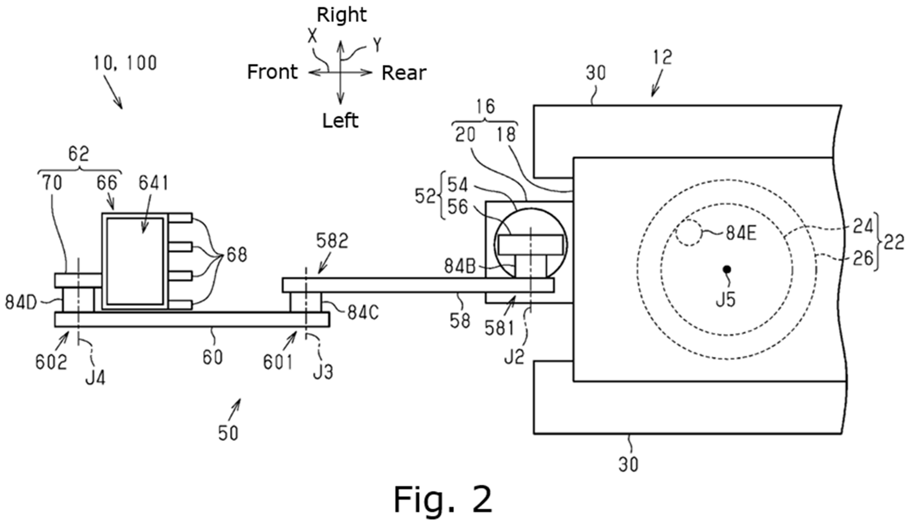

The casing front portion 20 is positioned on the frontward side relative to the casing main portion 18. As shown in Fig. 2, the casing front portion 20 is positioned substantially at the middle of the casing main portion 18 in the Y direction. The casing front portion 20 is fixed onto the front surface of the casing main portion 18. The casing front portion 20 has a smaller rectangular parallelepiped shape than the casing main portion 18, for example. The interior of the casing front portion 20 is hollow. Although not shown in the drawings, the upper body 16 has a cabin for accommodating an operator. The cabin is fixed as an integral part of the casing main portion 18. The upper body 16 may be referred to as the upper revolving body.

As shown in Fig. 1, the excavator 10 includes a slewing bearing 22. The slewing bearing 22 is interposed between the lower body 14 and the upper body 16 in the Z direction. In Fig. 1, the vertical width of the slewing bearing 22 is exaggeratedly large with respect to the Z direction.

As shown in Fig. 2, the slewing bearing 22 has an annular inner ring 24, an annular outer ring 26, and a plurality of rolling elements. Fig. 2 does not show the rolling elements. The outer diameter of the inner ring 24 is less than the inner diameter of the outer ring 26. The central axis of the inner ring 24, which is referred to as a fifth axis J5, coincides with the central axis of the outer ring 26. The fifth axis J5 extends upwards and downwards relative to the vehicle body, i.e., in the Z direction. As shown in Fig. 1, the fifth axis J5 passes vertically through both the upper body 16 and the lower body 14.

As shown in Fig. 2, The rolling elements are interposed between the inner ring 24 and the outer ring 26. The rolling elements support the inner and outer rings 24 and 26 such that they can rotate relative to each other. In other words, the outer ring 26 is rotatable about the fifth axis J5 with respect to the inner ring 24. The inner ring 24 is fixedly attached to the lower body 14. The outer ring 26 is fixed to the casing main portion 18 of the upper body 16. In other words, the upper body 16 is rotatable about the fifth axis J5 with respect to the lower body 14. Stated differently, the upper body 16 can rotate relative to the lower body 14.

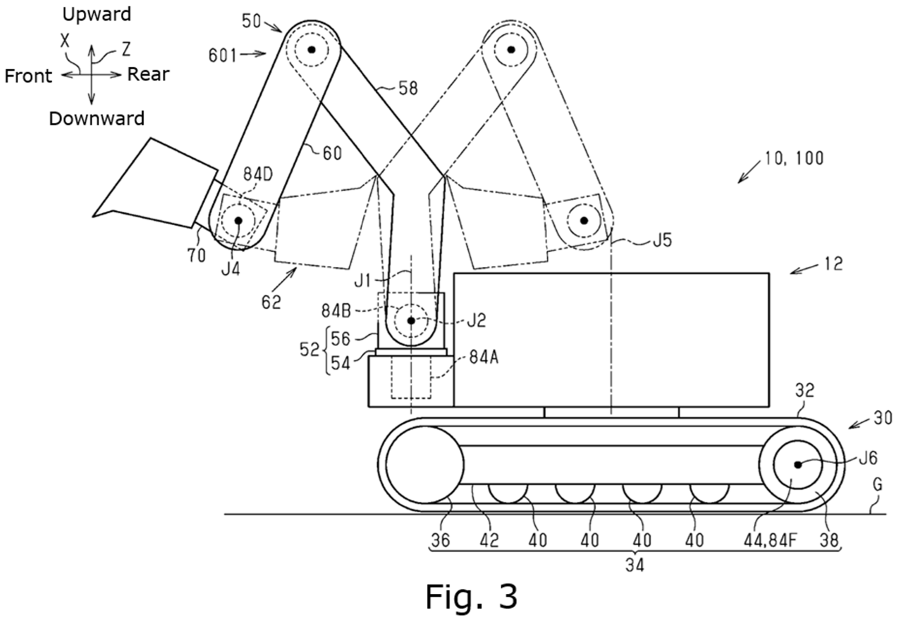

As shown in Figs. 2 and 3, the drive system 100 includes a pair of traveling units 30. As shown in Fig. 2, the traveling units 30 are provided at the left and right sides across the lower body 14. The traveling units 30 are horizontally symmetrical. Therefore, the following description of the traveling units 30 is focused on one of the traveling units 30 located on the left side of the lower body 14.

As shown in Fig. 3, the traveling unit 30 includes a traveling crawler 32 and a traveling mechanism 34. The traveling mechanism 34 has an idler 36, a drive sprocket 38, a plurality of rollers 40, a crawler frame 42, and a traveling actuator 44.

The traveling crawler 32 is shaped like an endless belt. The traveling crawler 32 is made of metal or rubber, for example. The traveling crawler 32 surrounds the traveling mechanism 34. The traveling crawler 32 as a whole extends in the X direction and is open on both sides in the Y direction. The traveling crawler 32 has a predetermined width in the Y direction. Although not shown in the drawings, the traveling crawler 32 has a plurality of grooves on the inner circumferential surface.

The idler 36 is located at the frontward end of the traveling mechanism 34. Specifically, the idler 36 is located at the frontward end inside the traveling crawler 32. The idler 36 has an annular shape. Although not shown in the drawings, the idler 36 can be moved in the frontward and rearward directions by a linear actuator. The idler 36 moves in the frontward and rearward directions to adjust the tension of the traveling crawler 32.

The drive sprocket 38 is located at the rearward end of the traveling mechanism 34. Specifically, the drive sprocket 38 is located at the rearward end inside the traveling crawler 32. The drive sprocket 38 has an annular shape. Although not shown in the drawings, the drive sprocket 38 has a plurality of teeth on the outer circumferential surface. The teeth are arranged at equal intervals in the circumferential direction around the central axis of the driving sprocket 38, which is referred to as a sixth axis J6. The teeth of the driving sprocket 38 engage with the grooves of the traveling crawler 32. The sixth axis J6 extends in the Y direction.

The rollers 40 are located between the idler 36 and the drive sprocket 38 in the X direction. The rollers 40 are arranged next to each other in the X direction. The rollers 40 have an annular shape. The diameter of the rollers 40 is less than the diameter of the idler 36 and the diameter of the drive sprocket 38. The rollers 40 are in contact with a portion of the traveling crawler 32 that is positioned near the ground surface G.

The crawler frame 42 extends in the X direction inside the traveling crawler 32. The crawler frame 42 rotatably supports the idler 36, the drive sprocket 38, and the rollers 40. The crawler frame 42 is fixedly attached to the lower body 14 of the main body 12.

The traveling actuator 44 is connected to the drive sprocket 38. Specifically, the traveling actuator 44 is fixedly attached to the center of the drive sprocket 38. The drive sprocket 38 rotates when acted upon by the torque output by the traveling actuator 44. The rotation of the drive sprocket 38 causes the traveling crawler 32 to rotate, which causes the excavator 10 to travel. In the following description, the traveling actuator 44 may be referred to as "the sixth actuator 84F."

In the pair of traveling units 30, the respective traveling actuators 44 do not necessarily operate synchronously. Specifically, as viewed from the lower body 14, the traveling actuator 44 of the left traveling unit 30 may be different from the traveling actuator 44 of the right traveling unit 30 in terms of the direction and speed of rotation, torque, and other factors. The excavator 10 can change the direction of travel and turn by allowing the left and right traveling actuators 44 to operate differently. The traveling actuators 44 will be described in more detail below.

### [Working Member]

As shown in Figs. 1 and 2, the working member 50 has a swing bracket 52, a boom 58, an arm 60, and an attachment 62. The swing bracket 52 is positioned on the casing front portion 20. The swing bracket 52 has a first swing wall 54 and a second swing wall 56. The first swing wall 54 is located on the upper surface of the casing front portion 20 of the upper body 16. As shown in Fig. 2, the first swing wall 54 is shaped like a disc, for example. The first swing wall 54 is connected to the casing front portion 20.

The swing bracket 52 is configured to rotate relative to the main body 12. Specifically, the first swing wall 54 is rotatable about a first axis J1 relative to the casing front portion 20. The first axis J1 is substantially parallel to the Z direction. The second swing wall 56 protrudes upward from the upper surface of the first swing wall 54. The second swing wall 56 is, for example, shaped like a rectangular plate.

The boom 58 is shaped like an elongated plate or column. The boom 58 is bent at an intermediate position in the longitudinal direction thereof. The boom 58 is located on the frontward side of the casing main portion 18 of the upper body 16. As shown in Fig. 2, a first end 581 of the boom 58 in the longitudinal direction is aligned with the second swing wall 56 of the swing bracket 52 in a direction along a second axis J2. The second axis J2 is a virtual axis that is substantially orthogonal to the fifth axis J5.

The boom 58 is configured to rotate relative to the main body 12. Specifically, the boom 58 can rotate about the first and second axes J1 and J2 with respect to the main body 12. The boom 58 rotates as the swing bracket 52 rotates about the first axis J1. The rotation of the boom 58 about the first axis J1 with respect to the casing front portion 20 is enabled by the rotation of the swing bracket 52 with respect to the casing front portion 20.

The first end 581 of the boom 58 is connected to the second swing wall 56 such that the boom 58 can rotate about the second axis J2. The rotation of the boom 58 about the second swing wall 56 allows the boom 58 to rotate about the second axis J2 with respect to the main body 12. The boom 58 is an example of a rotating member C. The main body 12 is an example of a connection portion to which the boom 58 can be connected. The swing bracket 52 can be considered to be another example of the rotating member C.

As shown in Fig. 1, the arm 60 is shaped like an elongated plate or column. The arm 60 is connected to a second end 582 of the boom 58, which is opposite to the first end 581. Specifically, a first end 601 of the arm 60 in the longitudinal direction is connected to the second end 582 of the boom 58. As shown in Fig. 2, the first end 601 of the arm 60 in the longitudinal direction is aligned with the second end 582 of the boom 58 in a direction along a third axis J3. The third axis J3 is a virtual axis that is substantially parallel to the second axis J2. The arm 60 can rotate relative to the boom 58. More specifically, the first end 601 of the arm 60 is connected to the second end 582 of the boom 58 such that the arm 60 can rotate about the third axis J3. The arm 60 is an example of the rotating member C. Also, the boom 58 is an example of a connection portion to which the arm 60 can be connected. In other words, the boom 58 is the rotating member C configured to rotate with respect to the upper body 16 and also is the connection portion to which the arm 60 can be connected.

As shown in Fig. 1, the attachment 62 is located near a second end 602 of the arm 60, which is opposite to the first end 601. In the present embodiment, the attachment 62 is a bucket. The attachment 62 has a bucket body 66, a plurality of teeth 68, and a bucket connecting wall 70. The bucket body 66 is shaped like a bucket. In other words, as shown in Fig. 2, the bucket body 66 has an opening 641. The teeth 68 protrude from one of the edges of the rectangular opening 641 of the bucket body 66. The bucket connecting wall 70 protrudes from a portion of the outer wall of the bucket body 66 that is located opposite the teeth 68 across the opening 641.

As shown in Fig. 2, the bucket connecting wall 70 is aligned with the second end 602 of the arm 60 in a direction along a fourth axis J4. The fourth axis J4 is a virtual axis that is substantially parallel to both the second and third axes J2 and J3.

The attachment 62 is rotatable relative to the arm 60. More specifically, the bucket connecting wall 70 of the attachment 62 is connected to the second end 602 of the arm 60 such that the attachment 62 can rotate about the fourth axis J4. The attachment 62 is an example of the rotating member C. Also, the arm 60 is an example of the connection portion to which the attachment 62 can be connected. In other words, the arm 60 is the rotating member C configured to rotate with respect to the boom 58 and also is the connection portion to which the attachment 62 can be connected.

As shown in Fig. 3, the swing bracket 52 can rotate 180 degrees or more relative to the main body 12. In other words, the boom 58 can rotate 180 degrees or more about the first axis J1 with respect to the main body 12. The swing bracket 52 may be configured to rotate 360 degrees or more relative to the main body 12. The attachment 62 can rotate 180 degrees or more relative to the arm 60. More specifically, the attachment 62 can rotate 180 degrees or more about the fourth axis J4 relative to the arm 60.

Although not shown in the drawings, the boom 58 may be configured to rotate 180 degrees or more about the second axis J2 with respect to the main body 12. The arm 60 may be configured to rotate 180 degrees or more relative to the boom 58. More specifically, the arm 60 can rotate 180 degrees or more about the third axis J3 relative to the boom 58.

### [Actuator]

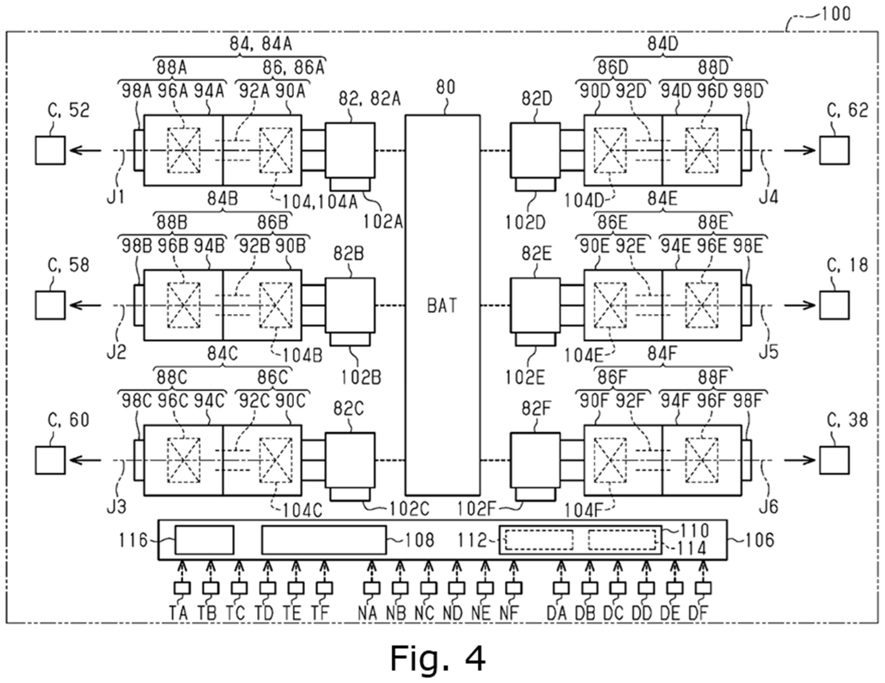

As shown in Fig. 4, the drive system 100 includes a battery 80, a plurality of converter circuits 82, and a plurality of actuators 84. The converter circuits 82 are connected to the battery 80. Each of the actuators 84 is connected to a corresponding one of the converter circuits 82. In other words, each converter circuit 82 connects the corresponding actuator 84 to the battery 80.

The battery 80 can supply DC power to the converter circuits 82. The battery 80 may be, for example, a lithium-ion battery. Each converter circuit 82 can convert the DC power supplied from the battery 80 into three-phase AC power. Each converter circuit 82 can supply the three-phase AC power to the corresponding actuator 84. In other words, each converter circuit 82 serves as the source of AC power for the corresponding actuator 84. Each converter circuit 82 can control the voltage, frequency, and current vector of the AC power supplied to the actuator 84. Each converter circuit 82 may be an inverter circuit including a plurality of transistors. Each converter circuit 82 may include a converter configured to convert the voltage of the DC power supplied from the battery 80 into a predetermined voltage.

The drive system 100 has a first converter circuit 82A, a second converter circuit 82B, a third converter circuit 82C, a fourth converter circuit 82D, a fifth converter circuit 82E, and a sixth converter circuit 82F, as the converter circuits 82. The drive system 100 also has a first actuator 84A, a second actuator 84B, a third actuator 84C, a fourth actuator 84D, a fifth actuator 84E, and a sixth actuator 84F, as the actuators 84.

The first actuator 84A is connected to the first converter circuit 82A. The second actuator 84B is connected to the second converter circuit 82B. The third actuator 84C is connected to the third converter circuit 82C. The fourth actuator 84D is connected to the fourth converter circuit 82D. The fifth actuator 84E is connected to the fifth converter circuit 82E. The sixth actuator 84F is connected to the sixth converter circuit 82F.

As shown in Fig. 1, the first actuator 84A is housed in the casing front portion 20 of the upper body 16. As shown in Fig. 4, the first actuator 84A includes a first electric motor 86A and a first speed reducer 88A. The first electric motor 86A is a three-phase AC motor. The first electric motor 86A is electrically connected to the battery 80 via the first converter circuit 82A.

The first electric motor 86A has a housing 90A, and an output shaft 92A that can rotate relative to the housing 90A. The housing 90A is attached to the casing front portion 20 of the upper body 16. The output shaft 92A protrudes from the inside of the housing 90A to the outside. The output shaft 92A is shaped like a circular column. The output shaft 92A can rotate about its own central axis, which is referred to as the first axis J1, with respect to the housing 90A. In other words, the output shaft 92A outputs torque about the first axis J1. The output shaft 92A is configured to rotate about the first axis J1 in both the forward and reverse directions.

As shown in Fig. 4, the first speed reducer 88A has a housing 94A, a reduction mechanism 96A, and an output member 98A. The housing 94A is fixed to the housing 90A of the first electric motor 86A. The reduction mechanism 96A is located inside the housing 94A.

The reduction mechanism 96A receives torque input from the output shaft 92A of the first electric motor 86A. The reduction mechanism 96A amplifies the torque from the first electric motor 86A at a predetermined ratio and outputs the amplified torque to the output member 98A. The reduction mechanism 96A may be of, for example, an eccentric oscillation gear type or planetary gear type. The output member 98A is shaped like a circular column. The central axis of the output member 98A substantially coincides with the first axis J1. The output member 98A is rotatable relative to the housing 94A. The output member 98A rotates about the first axis J1 in response to the rotation of the output shaft 92A of the first electric motor 86A.

The output member 98A of the first speed reducer 88A is attached to the first swing wall 54 of the swing bracket 52. As shown in Fig. 4, the output member 98A outputs torque about the first axis J1. The swing bracket 52 rotates about the first axis J1 in response to the torque from the output member 98A. In other words, the first actuator 84A is an electric device that can be driven by the first electric motor 86A and that can drive the swing bracket 52. Stated differently, the first actuator 84A is an electric device that can be driven by the first electric motor 86A and that can drive the boom 58.

As shown in Fig. 2, the second actuator 84B is located between the second swing wall 56 of the swing bracket 52 and the first end 581 of the boom 58. The second actuator 84B is basically configured the same as the first actuator 84A, except for specific details such as the dimensions, reduction ratio, and output. The configuration of the second actuator 84B is therefore only briefly described below.

As shown in Fig. 4, the second actuator 84B includes a second electric motor 86B and a second speed reducer 88B. The second electric motor 86B is electrically connected to the battery 80 via the second converter circuit 82B. A housing 908 of the second electric motor 86B is mounted on the second swing wall 56 of the swing bracket 52. An output shaft 928 of the second electric motor 86B outputs torque about its own central axis, which is referred to as the second axis J2. As shown in Fig. 2, the second axis J2 passes through both the second swing wall 56 of the swing bracket 52 and the first end 581 of the boom 58.

An output member 98B of the second speed reducer 88B is attached to the first end 581 of the boom 58. As shown in Fig. 4, the output member 98B outputs torque about the second axis J2. The boom 58 rotates about the second axis J2 in response to the torque from the output member 98B. A housing 94B and a reduction mechanism 96B of the second speed reducer 88B have the same function as the housing 94A and reduction mechanism 96A of the first speed reducer 88A. Stated differently, the second actuator 84B is an electric device that can be driven by the second electric motor 86B and that can drive the boom 58.

As shown in Fig. 2, the third actuator 84C is located between the second end 582 of the boom 58 and the first end 601 of the arm 60. The third actuator 84C is basically configured the same as the first actuator 84A, except for specific details such as the dimensions, reduction ratio, and output. The configuration of the third actuator 84C is therefore only briefly described below.

As shown in Fig. 4, the third actuator 84C includes a third electric motor 86C and a third speed reducer 88C. The third electric motor 86C is electrically connected to the battery 80 via the third converter circuit 82C. A housing 90C of the third electric motor 86C is attached to the second end 582 of the boom 58. An output shaft 92C of the third electric motor 86C outputs torque about its own central axis, which is referred to as the third axis J3. As shown in Fig. 2, the third axis J3 passes through both the second end 582 of the boom 58 and the first end 601 of the arm 60.

An output member 98C of the third speed reducer 88C is attached to the first end 601 of the arm 60. As shown in Fig. 4, the output member 98C outputs torque about the third axis J3. The arm 60 rotates about the third axis J3 in response to the torque from the output member 98C. A housing 94C and a reduction mechanism 96C of the third speed reducer 88C have the same function as the housing 94A and reduction mechanism 96A of the first speed reducer 88A. Stated differently, the third actuator 84C is an electric device that can be driven by the third electric motor 86C and that can drive the arm 60.

As shown in Fig. 2, the fourth actuator 84D is located between the second end 602 of the arm 60 and the bucket connecting wall 70 of the attachment 62. The fourth actuator 84D is basically configured the same as the first actuator 84A, except for specific details such as the dimensions, reduction ratio, and output. The configuration of the fourth actuator 84D is therefore only briefly described below.

As shown in Fig. 4, the fourth actuator 84D includes a fourth electric motor 86D and a fourth speed reducer 88D. The fourth electric motor 86D is electrically connected to the battery 80 via the fourth converter circuit 82D. A housing 90D of the fourth electric motor 86D is attached to the second end 602 of the arm 60. An output shaft 92D of the fourth electric motor 86D outputs torque about its own central axis, which is referred to as the fourth axis J4. As shown in Fig. 2, the fourth axis J4 passes through both the second end 602 of the arm 60 and the bucket connecting wall 70.

An output member 98D of the fourth speed reducer 88D is attached to the bucket connecting wall 70. As shown in Fig. 4, the output member 98D outputs torque about the fourth axis J4. The attachment 62 rotates about the fourth axis J4 in response to the torque from the output member 98D. A housing 94D and a reduction mechanism 96D of the fourth speed reducer 88D have the same function as the housing 94A and reduction mechanism 96A of the first speed reducer 88A. Stated differently, the fourth actuator 84D is an electric device that can be driven by the fourth electric motor 86D and that can drive the attachment 62.

The fifth actuator 84E is housed in the casing main portion 18 of the upper body 16. The fifth actuator 84E is basically configured the same as the first actuator 84A, except for specific details such as the dimensions, reduction ratio, and output. The configuration of the fifth actuator 84E is therefore only briefly described below.

As shown in Fig. 4, the fifth actuator 84E includes a fifth electric motor 86E and a fifth speed reducer 88E. The fifth electric motor 86E is electrically connected to the battery 80 via the fifth converter circuit 82E. The fifth electric motor 86E has a housing 90E attached to the casing main portion 18 of the upper body 16. An output shaft 92E of the fifth electric motor 86E outputs torque about its own central axis, which is referred to as the fifth axis J5.

An output member 98E of the fifth speed reducer 88E has a plurality of teeth. The teeth mesh with the teeth of the inner ring 24 of the slewing bearing 22. The output member 98E outputs torque about an axis coaxial with the fifth electric motor 86E. This torque causes the upper body 16 to rotate with the housing 90E of the fifth electric motor 86E, relative to the inner ring 24 and thus the lower body 14. In other words, the fifth actuator 84E causes the upper body 16 to rotate relative to the lower body 14. A housing 94E and a reduction mechanism 96E of the fifth speed reducer 88E have the same function as the housing 94A and reduction mechanism 96A of the first speed reducer 88A. Stated differently, the fifth actuator 84E is an electric device that can be driven by the fifth electric motor 86E and that can drive the upper body 16.

As shown in Fig. 3, the sixth actuator 84F is located on the crawler frame 42 of the traveling mechanism 34. The sixth actuator 84F is basically configured the same as the first actuator 84A, except for specific details such as the dimensions, reduction ratio, and output. The configuration of the sixth actuator 84F is therefore only briefly described below.

As shown in Fig. 4, the sixth actuator 84F includes a sixth electric motor 86F and a sixth speed reducer 88F. The sixth electric motor 86F is electrically connected to the battery 80 via the sixth converter circuit 82F. A housing 90F of the sixth electric motor 86F is attached to the crawler frame 42 of the traveling mechanism 34. An output shaft 92F of the sixth electric motor 86F outputs torque about its own central axis, which is referred to as the sixth axis J6.

An output member 98F of the sixth speed reducer 88F is attached to the drive sprocket 38. As shown in Fig. 4, the output member 98F outputs torque about the sixth axis J6. The drive sprocket 38 rotates about the sixth axis J6 in response to the torque from the output member 98F. A housing 94F and a reduction mechanism 96F of the sixth speed reducer 88F have the same function as the housing 94A and reduction mechanism 96A of the first speed reducer 88A. Stated differently, the sixth actuator 84F is an electric device that can be driven by the sixth electric motor 86F and that can drive the drive sprocket 38.

As described above, the drive system 100 includes the pair of traveling units 30, and the respective traveling actuators 44 do not operate synchronously. Therefore, the drive system 100 has two sixth converter circuits 82F and two sixth electric motors 86F. In other words, the drive system 100 has a sixth converter circuit 82F for the left traveling unit 30 and a sixth converter circuit 82F for the right traveling unit 30 as viewed from the lower body 14. The drive system 100 also has a sixth actuator 84F for the left traveling unit 30 and a sixth actuator 84F for the right traveling unit 30 as viewed from the lower body 14. Since the two sixth actuators 84F are configured the same, the redundant description and illustration are omitted.

### [Cooling Device]

As shown in Fig. 4, the drive system 100 includes a plurality of cooling devices. Specifically, the drive system 100 has: a first cooling device 102A, a second cooling device 102B, a third cooling device 102C, a fourth cooling device 102D, a fifth cooling device 102E, and a sixth cooling device 102F, as the cooling devices. Each of the cooling devices 102A to 102F is adjacent to a corresponding one of the converter circuits 82. Each of the cooling devices 102A to 102F can cool the corresponding converter circuit 82. In other words, the first cooling device 102A can cool the first converter circuit 82A. The second cooling device 102B can cool the second converter circuit 82B. The third cooling device 102C can cool the third converter circuit 82C. The fourth cooling device 102D can cool the fourth converter circuit 82D. The fifth cooling device 102E can cool the fifth converter circuit 82E. The sixth cooling device 102F can cool the sixth converter circuit 82F. The cooling devices 102A to 102F are air-cooled type. Specifically, each of the cooling devices 102A to 102F includes a fan configured to blow external air toward the corresponding converter circuit 82, and an air channel through which the air blown by the fan flows. The converter circuit 82 is located in the middle of the air channel, so that it can be cooled by the air from the fan.

### [Sensor]

The drive system 100 includes a plurality of torque sensors. Specifically, the drive system 100 includes a first torque sensor TA, a second torque sensor TB, a third torque sensor TC, a fourth torque sensor TD, a fifth torque sensor TE, and a sixth torque sensor TF as the torque sensors. The first torque sensor TA can detect the torque of the first electric motor 86A. The second torque sensor TB can detect the torque of the second electric motor 86B. The third torque sensor TC can detect the torque of the third electric motor 86C. The fourth torque sensor TD can detect the torque of the fourth electric motor 86D. The fifth torque sensor TE can detect the torque of the fifth electric motor 86E. The sixth torque sensor TF can detect the torque of the sixth electric motor 86F.

In one example, each of the torque sensors TA to TF can detect the torque of a corresponding one of the electric motors 86A to 86F by referring to the amount of current flowing through the corresponding one of the electric motors 86A to 86F. In another example, each of the torque sensors TA to TF can detect the torque of the corresponding one of the electric motors 86A to 86F by referring to the strain of the output shaft of the corresponding one of the electric motors 86A to 86F. Each of the torque sensors TA to TF may use other methods to detect the torque of the corresponding one of the electric motors 86A to 86F.

The drive system 100 includes a plurality of rotational speed sensors. Specifically, the drive system 100 includes a first rotational speed sensor NA, a second rotational speed sensor NB, a third rotational speed sensor NC, a fourth rotational speed sensor ND, a fifth rotational speed sensor NE, and a sixth rotational speed sensor NF as the rotational speed sensors. The first rotational speed sensor NA can detect the rotational speed of the first electric motor 86A. The second rotational speed sensor NB can detect the rotational speed of the second electric motor 86B. The third rotational speed sensor NC can detect the rotational speed of the third electric motor 86C. The fourth rotational speed sensor ND can detect the rotational speed of the fourth electric motor 86D. The fifth rotational speed sensor NE can detect the rotational speed of the fifth electric motor 86E. The sixth rotational speed sensor NF can detect the rotational speed of the sixth electric motor 86F. As used herein, the term "rotational speed" refers to the number of rotations per unit time.

In one example, each of the rotational speed sensors NA to NF can detect the rotational speed of a corresponding one of the electric motors 86A to 86F by referring to the amount of current flowing through the corresponding one of the electric motors 86A to 86F. In another example, each of the rotational speed sensors NA to NF may be an optical or magnetic sensor attached to the corresponding one of the electric motors 86A to 86F and configured to detect the rotational speed. Each of the rotational speed sensors NA to NF may use other methods to detect the rotational speed of the corresponding one of the electric motors 86A to 86F.

The drive system 100 includes a plurality of angle sensors. Specifically, the drive system 100 includes a first angle sensor DA, a second angle sensor DB, a third angle sensor DC, a fourth angle sensor DD, a fifth angle sensor DE, and a sixth angle sensor DF. The first angle sensor DA can detect the angular position of the first electric motor 86A. The second angle sensor DB can detect the angular position of the second electric motor 86B. The third angle sensor DC can detect the angular position of the third electric motor 86C. The fourth angle sensor DD can detect the angular position of the fourth electric motor 86D. The fifth angle sensor DE can detect the angular position of the fifth electric motor 86E. The sixth angle sensor DF can detect the angular position of the sixth electric motor 86F.

In one example, each of the angle sensors DA to DF may be an electromagnetic-induction sensor configured to detect the angular position of a corresponding one of the electric motors 86A to 86F by referring to electromagnetic induction caused by the rotation of the rotor of the corresponding one of the electric motors 86A to 86F. In another example, each of the angle sensors DA to DF may be an optical sensor attached to the corresponding one of the electric motors 86A to 86F and configured to detect the angular position. Each of the angle sensors DA to DF may use other methods to detect the angular position of the corresponding one of the electric motors 86A to 86F. The angle sensors may also serve as the rotational speed sensors described above. In this case, while detecting the angular position of the corresponding electric motor 86, each sensor may detect the rotational speed of the corresponding electric motor 86 based on the amount of change in angular position per unit time.

Although not shown, the excavator 10 includes various other sensors necessary for operating the excavator 10 in addition to the above sensors. For example, the excavator 10 includes sensors to detect the temperatures of the battery 80 and converter circuits 82, among other sensors.

### [Specific Details of Electric Motors]

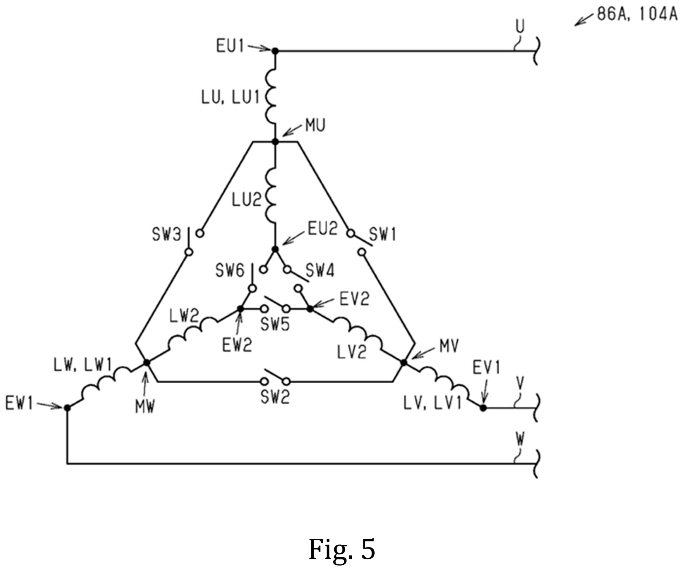

The circuit structure of the electric motors 86 will be now described with reference to Fig. 5. In the following description, the circuit structure of the first electric motor 86A will be discussed. The second, third, fourth, fifth and sixth electric motors 86B, 86C, 86D, 86E, and 86F have the same circuit configuration as the first electric motor 86A, and thus not described here.

As shown in Fig. 5, the electric motor 86A has three wires corresponding to the respective phases of the three-phase AC. Specifically, the electric motor 86A has a U-phase wire U, a V-phase wire V, and a W-phase wire W. The U-phase wire U, V-phase wire V, and W-phase wire W are connected to the first converter circuit 82A, which is the converter circuit corresponding to the first electric motor 86A.

The first electric motor 86A has a plurality of windings. Specifically, the first electric motor 86A has a U-phase winding LU, a V-phase winding LV, and a W-phase winding LW. Each winding has a first end and a second end that are opposite to each other. Specifically, the U-phase winding LU has a U-phase first end EU1 and a U-phase second end EU2. The V-phase winding LV has a V-phase first end EV1 and a V-phase second end EV2. The W-phase winding LW has a W-phase first end EW1 and a W-phase second end EW2.

The first end of each winding is connected to a corresponding wire. Specifically, the U-phase first end EU1 is connected to the U-phase wire U. The V-phase first end EV1 is connected to the V-phase wire V. The W-phase first end EW1 is connected to the W-phase wire W.

Each winding has an intermediate point between the first and second ends. Specifically, the U-phase winding LU has a U-phase intermediate point MU between the U-phase first and second ends EU1 and EU2. The V-phase winding LV has a V-phase intermediate point MV between the V-phase first and second ends EV1 and EV2. The W-phase winding LW has a W-phase intermediate point MW between the W-phase first and second ends EW1 and EW2.

The U-phase winding LU has a U-phase first winding LU1 and a U-phase second winding LU2. The U-phase first winding LU1 is the portion of the U-phase winding LU between the U-phase first end EU1 and the U-phase intermediate point MU. The U-phase second winding LU2 is the portion of the U-phase winding LU between the U-phase intermediate point MU and the U-phase second end EU2. The number of turns of the U-phase first winding LU1 may be different from that of the U-phase second winding LU2. The number of turns of the U-phase first winding LU1 may be equal to that of the U-phase second winding LU2. In other words, the term "intermediate point" does not mean the middle point of the winding in length in the present embodiment.

The V-phase winding LV has a V-phase first winding LV1 and a V-phase second winding LV2. The V-phase first winding LV1 is the portion of the V-phase winding LV between the V-phase first end EV1 and the V-phase intermediate point MV. The V-phase second winding LV2 is the portion of the V-phase winding LV between the V-phase intermediate point MV and the V-phase second end EV2. The number of turns of the V-phase first winding LV1 may be different from that of the V-phase second winding LV2. The number of turns of the V-phase first winding LV1 may be equal to that of the V-phase second winding LV2.

The W-phase winding LW has a W-phase first winding LW1 and a W-phase second winding LW2. The W-phase first winding LW1 is the portion of the W-phase winding LW between the W-phase first end EW1 and the W-phase intermediate point MW. The W-phase second winding LW2 is the portion of the W-phase winding LW between the W-phase intermediate point MW and the W-phase second end EW2. The number of turns of the W-phase first winding LW1 may be different from that of the W-phase second winding LW2. The number of turns of the W-phase first winding LW1 may be equal to that of the W-phase second winding LW2.

### [Switching Circuit]

As shown in Fig. 4, the drive system 100 includes a plurality of switching circuits 104. The switching circuits 104 are applied for the electric motors 86A to 86F in a one-to-correspondence. Specifically, a first switching circuit 104A is applied to the first electric motor 86A. A second switching circuit 104B is applied to the second electric motor 86B. A third switching circuit 104C is applied to the third electric motor 86C. A fourth switching circuit 104D is applied to the fourth electric motor 86D. A fifth switching circuit 104E is applied to the fifth electric motor 86E. A sixth switching circuit 104F is applied to the sixth electric motor 86F.

In the following description, the first switching circuit 104A is discussed. The second, third, fourth, fifth and sixth switching circuits 104B, 104C, 104D, 104E, and 104F have the same circuit configuration as the first switching circuit 104A, and thus not described here.

As shown in Fig. 5, the first switching circuit 104A has a first switch SW1, a second switch SW2, a third switch SW3, a fourth switch SW4, a fifth switch SW5, and a sixth switch SW6. Each of the switches SW1 to SW6 is switchable between a conducting state in which electrical communication is established between first and second ends of the switch that are opposite to each other, and a disconnection state in which electrical communication is disconnected between the first and second ends. The switches SW1 to SW6 may be semiconductor switches or physical switches.

A first end of the first switch SW1 is connected to the U-phase intermediate point MU. A second end of the first switch SW1 is connected to the V-phase intermediate point MV. A first end of the second switch SW2 is connected to the V-phase intermediate point MV. A second end of the second switch SW2 is connected to the W-phase intermediate point MW. A first end of the third switch SW3 is connected to the W-phase intermediate point MW. A second end of the third switch SW3 is connected to the U-phase intermediate point MU. That is to say, the first switch SW1, second switch SW2, and third switch SW3 connect the U-phase intermediate point MU, V-phase intermediate point MV, and W-phase intermediate point MW in an annular fashion.

A first end of the fourth switch SW4 is connected to the second end EU2 of the U-phase winding LU. A second end of the fourth switch SW4 is connected to the second end EV2 of the V-phase winding LV. A first end of the fifth switch SW5 is connected to the second end EV2 of the V-phase winding LV. A second end of the fifth switch SW5 is connected to the second end EW2 of the W-phase winding LW. A first end of the sixth switch SW6 is connected to the second end EW2 of the W-phase winding LW. A second end of the sixth switch SW6 is connected to the second end EU2 of the U-phase winding LU. That is to say, the fourth switch SW4, fifth switch SW5, and sixth switch SW6 connect the second end EU2 of the U-phase winding LU, the second end EV2 of the V-phase winding LV, and the second end EW2 of the W-phase winding LW in an annular fashion.

The first switch SW1, second switch SW2, and third switch SW3 operate in a coordinated manner. Specifically, when any one of the first, second and third switches SW1, SW2, and SW3 is in the conducting state, the other two are also in the conducting state. When any one of the first, second and third switches SW1, SW2, and SW3 is in the disconnection state, the other two are also in the disconnection state.

The fourth switch SW4, fifth switch SW5, and sixth switch SW6 operate in a coordinated manner. Specifically, when any one of the fourth, fifth and sixth switches SW4, SW5, and SW6 is in the conducting state, the other two are also in the conducting state. When any one of the fourth, fifth and sixth switches SW4, SW5, and SW6 is in the disconnection state, the other two are also in the disconnection state.

The set of first, second, and third switches SW1, SW2 and SW3 is complementary with the set of fourth, fifth, and sixth switches SW4, SW5, and SW6. Specifically, when the first, second and third switches SW1, SW2, and SW3 are in the disconnection state, the fourth, fifth and sixth switches SW4, SW5 and SW6 are in the conducting state. When the first, second and third switches SW1, SW2, and SW3 are in the conducting state, the fourth, fifth and sixth switches SW4, SW5 and SW6 are in the disconnection state.

In other words, the switching circuit 104A is switchable between a first connection state and a second connection state. Specifically, when the switching circuit 104A is in the first connection state, the first, second and third switches SW1, SW2, and SW3 are in the disconnection state, and the fourth, fifth and sixth switches SW4, SW5 and SW6 are in the conducting state. In other words, when the switching circuit 104A is in the first connection state, the intermediate points MU, MV and MW of the windings LU, LV and LW are disconnected from each other, and the second ends EU2, EV2, and EW2 are connected to each other.

When the switching circuit 104A is in the second connection state, the first, second and third switches SW1, SW2, and SW3 are in the conducting state, and the fourth, fifth and sixth switches SW4, SW5 and SW6 are in the disconnection state. In other words, when the switching circuit 104A is in the second connection state, the intermediate points MU, MV and MW of the windings LU, LV and LW are connected to each other.

When the switching circuit 104A is in the first connection state, the windings from the first end to the second end of the winding of each phase are responsible for driving the first electric motor 86A. Specifically, as for the U-phase winding LU, the U-phase first winding LU1 and U-phase second winding LU2 are responsible for driving the first electric motor 86A. As for the V-phase winding LV, the V-phase first winding LV1 and V-phase second winding LV2 are responsible for driving the first electric motor 86A. As for the W-phase winding LW, the W-phase first winding LW1 and W-phase second winding LW2 are responsible for driving the first electric motor 86A.

When the switching circuit 104 is in the second connection state, the winding from the first end to the intermediate point of the winding of each phase is responsible for driving the first electric motor 86A. Specifically, as for the U-phase winding LU, the U-phase first winding LU1 is responsible for driving the first electric motor 86A. As for the V-phase winding LV, the V-phase first winding LV1 is responsible for driving the first electric motor 86A. As for the W-phase winding LW, the W-phase first winding LW1 is responsible for driving the first electric motor 86A.

Stated differently, when the first switching circuit 104A is in the first connection state, the number of turns of the windings that are used to drive the first electric motor 86A is greater than when it is in the second connection state. Therefore, when the first switching circuit 104A is in the first connection state, the first electric motor 86A operates in the high torque range. When the first switching circuit 104A is in the second connection state, the first electric motor 86A operates in the high rotational speed range.

### <Control Device>

As shown in Fig. 4, the control system of the working machine has a control device 106. The control device 106 is a computer with a processing circuit. The processing circuit includes a CPU 108 and a memory 110. The memory 110 includes three types of memories: a RAM, a ROM, and an electrically rewritable nonvolatile memory. In this embodiment, these three types of storage media are collectively referred to as the memory 110. The memory 110 stores in advance various control programs 112 that describe the processes to be executed by the CPU 108. The memory 110 stores in advance various data 114 necessary for the CPU 108 to execute the control programs 112. The processing circuit includes a communication circuit for wireless communication with an external device.

The control device 106 can control the converter circuits 82. Specifically, the control device 106 controls each converter circuit 82 to control the AC power supplied to the corresponding actuator 84.

The control device 106 can control the switching circuits 104. Specifically, the control device 106 can switch the switching circuits 104 between the first connection state and the second connection state. In more detail, the control device 106 is configured to switch the respective switches in each switching circuit 104 between the conducting state and the disconnection state to switch the switching circuit 104 between the first connection state and the second connection state.

The control device 106 can acquire information from various sensors provided on the excavator 10. Specifically, the control device 106 can acquire torque information of the first to sixth electric motors 86A to 86F from the first to sixth torque sensors TA to TF. In addition, the control device 106 can acquire rotational speed information of the first to sixth electric motors 86A to 86F from the first to sixth rotational speed sensors NA to NF. The control device 106 can also acquire angular position information of the first to sixth electric motors 86A to 86F from the first to sixth angle sensors DA to DF.

The following describes examples of how the control device 106 can control the first switching circuit 104A. The control device 106 can control the second to sixth switching circuits 104B to 104F in the same manner. The following does not mention how the control device 106 can control the second to sixth switching circuits 104B to 104F.

For example, the control device 106 can switch the first switching circuit 104A between the first connection state and the second connection state, based on the torque information about the first electric motor 86A. For example, the control device 106 can switch the first switching circuit 104A to the first connection state if the torque of the first electric motor 86A is no less than a predetermined specified value. The control device 106 can switch the first switching circuit 104A to the second connection state if the torque of the first electric motor 86A is less than the specified value.

According to another example, the control device 106 can switch the first switching circuit 104A between the first connection state and the second connection state, based on the rotational speed information about the first electric motor 86A. For example, the control device 106 can switch the first switching circuit 104A to the first connection state if the rotational speed of the first electric motor 86A is no less than a predetermined specified value. The control device 106 can switch the first switching circuit 104A to the second connection state if the rotational speed of the first electric motor 86A is less than the specified value.

According to yet another example, the control device 106 can switch the first switching circuit 104 between the first connection state and the second connection state, based on the angular position information about the first electric motor 86A. For example, the control device 106 identifies the orientation of the boom 58 relative to the main body 12, based on the angular position of the first electric motor 86A. The control device 106 then determines the angle of the boom 58 relative to the ground surface G. The angle to be determined is the acute angle between (i) a virtual straight line passing through the second axis J2 and the center of gravity of the boom 58 and (ii) the horizontal plane when viewed in a direction parallel to the second axis J2. Therefore, the determined angle is less than 90 degrees. The control device 106 can then switch the first switching circuit 104A to the first connection state if the determined angle is less than a predetermined specified angle. The control device 106 can switch the first switching circuit 104A to the second connection state if the determined angle is no less than the specified value.

When performing control based on the angular position information of the first electric motor 86A, the control device 106 can keep the switching circuit 104 in the first connection state until the first electric motor 86A rotates through the predetermined specified angle from the position where the first electric motor 86A is stopped. In other words, the control device 106 can keep the switching circuit 104 in the first connection state until the rotating member C rotates through the predetermined specified angle from the position where the rotating member C is stopped.

As shown in Fig. 4, the control device 106 has a changeover switch 116 that can be operated by the operator of the working machine. The control device 106 can switch the first switching circuit 104A between the first connection state and the second connection state, based on how the changeover switch 116 is operated.

### <How Embodiment Works>

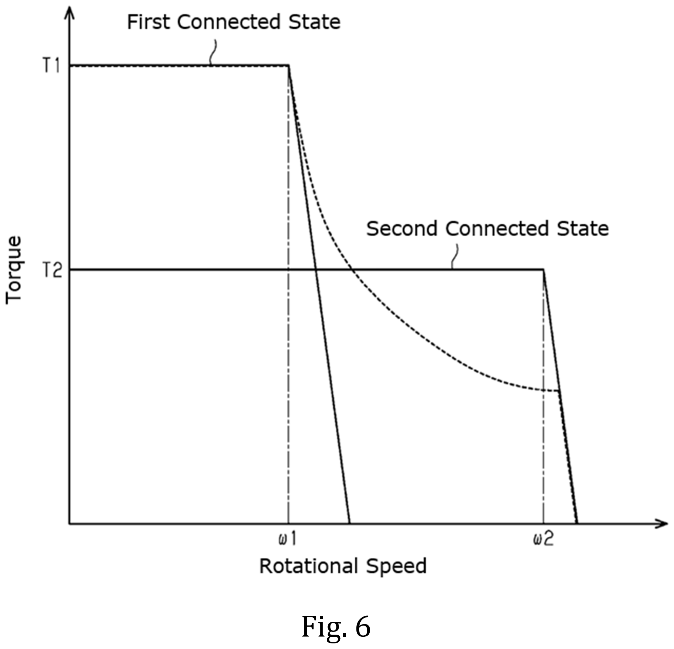

The following now describes how the present embodiment works with reference to Fig. 6. In the following description, the first to sixth electric motors 86A to 86F may be occasionally referred to as "the electric motor 86."

Fig. 6 shows the rotational speed-torque characteristics of the electric motor 86. In Fig. 6, the solid lines indicate the rotational speed-torque characteristics of the electric motor 86 in the first and second connection states. The dotted line indicates, as a comparative example, the rotational speed-torque characteristics of an electric motor without the switching circuit 104. The electric motor of the comparative example includes windings having the same number of turns as the windings of the electric motor 86 in the first connection state.

As shown in Fig. 6, in the first connection state, the electric motor 86 operates in the high torque range. The electric motor of the comparative example similarly operates in the high torque range. Specifically, the electric motor 86 in the first connection state and the electric motor of the comparative example can produce first torque T1 in the range where the rotational speed is below a first rotational speed ω1. When the rotational speed of the electric motors reaches the first rotational speed ω1, the back electromotive force generated by the electric motors becomes equal to the input voltage. As a result, no current flows into the electric motor 86. Therefore, in the range where the rotational speed of the electric motors exceeds the first rotational speed ω1, the torque decreases rapidly as the rotational speed increases.

One of the ways to achieve operation in both the high torque and high rotational speed ranges is using two electric motors, one for high torque and one for high rotational speed. However, the use of two electric motors leads to an increase in the occupied volume and weight of the electric motors. When it comes to the electric motors configured to drive the working member 50 of the working machine, there are limitations in terms of the occupied volume and weight.

One example of the method to drive a single electric motor at rotational speeds above the first rotational speed ω1 is field weakening control. As shown in Fig. 6, the field weakening control enables the electric motor relating to the comparative example to output torque to a certain extent even in a range where the rotational speed is higher than the first rotational speed ω1.

However, the field weakening control reduces the power efficiency of the electric motor. In other words, the power efficiency of the electric motor relating to the comparative example decreases once the rotational speed increases beyond the first rotational speed ω1. The decreased power efficiency of the electric motor leads to reduced operating time and increased energy cost of the working machine.

Due to the switching circuit 104, on the other hand, the electric motor 86 relating to the present embodiment can be switched from the first connection state to the second connection state. In the second connection state, the electric motor 86 can rotate at lower torque and higher rotational speed than in the first connection state. Specifically, in the second connection state, the electric motor 86 can produce second torque T2 in the range where the rotational speed is no more than a second rotational speed ω2. The second rotational speed ω2 is greater than the first rotational speed ω1. The second torque T2 is less than the first torque T1.

In the range where the rotational speed is greater than the first rotational speed ω1, the power efficiency of the electric motor 86 in the second connection state is higher than that of the electric motor relating to the comparative example for which the field weakening control is performed. This means that, as being switchable between the first and second connection states, the electric motor 86 can operate in both the high torque and high rotational speed ranges while achieving high power efficiency.

Here, Fig. 6 indicates that the electric motor 86 in the first connection state can operate even in the range where the rotational speed is greater than the first rotational speed ω1. The electric motor 86 in the second connection state can operate even in a range where the rotational speed is greater than the second rotational speed ω2. As described above, when the electric motor 86 is in the first or second connection state, the back electromotive force generated by the electric motor becomes equal to the input voltage once the rotational speed reaches the first or second rotational speed ω1 or ω2. If this occurs, the current becomes zero and no torque is generated from the theoretical perspective. In an actual motor, however, the inductance component of the windings delays the change in current, so that the current is supplied for a short period of time even when the base speed is exceeded. Due to this current, the torque generation continues and the rotational speed further increases. Furthermore, because of its inertia, the rotor continues to rotate until the torque is completely reduced to zero. Therefore, according to the rotational speed-torque characteristics of the electric motor 86 in the first and second connection states shown in Fig. 6, the torque reaches zero when the rotational speed is greater than ω1 and ω2.

### <Advantageous Effects of Embodiment>

The present embodiment produces the following advantageous effects.
(1) The drive system 100 of the working machine includes the electric motor 86 that is configured to power the rotating member C. The switching circuit 104 can switch the connection state of the windings of the electric motor 86 between the first connection state and the second connection state where the electric motor 86 can rotate at lower torque and higher rotational speed than in the first connection state. Accordingly, as the switching circuit 104 switches the connection state between the first and second connection states, the electric motor 86 can operate in both the high torque and high rotational speed ranges while achieving high power efficiency. Thus, the working machine can achieve improved work efficiency while accomplishing improved power efficiency.
(2) The switching circuit 104 is switchable between (i) the first connection state in which the intermediate points of the windings are disconnected from each other and the second ends are connected to each other, and (ii) the second connection state in which the intermediate points of the windings are connected to each other. When the switching circuit 104 is in the first connection state, the windings from the first end to the second end of the winding of each phase are responsible for driving the electric motor 86. When the switching circuit 104 is in the second connection state, the winding from the first end to the intermediate point of the winding of each phase is responsible for driving the electric motor 86. Stated differently, when the switching circuit 104 is in the second connection state, the number of turns of the windings used to drive the electric motor 86 is less than when it is in the first connection state. Therefore, in the second connection state, the electric motor 86 can rotate at lower torque and higher rotational speed than in the first connection state.
(3) The rotatable range of the rotating member C about the connection portion is 180 degrees or more. With such a configuration, as the rotatable range of the rotating member C increases, a required range of speed-torque characteristics tends to broaden from the viewpoints of the work efficiency and power efficiency. Specifically, as the rotatable range increases, an effect of shortening the work time by increasing the rotational speed becomes more significant. Furthermore, as the rotatable range increases, an effect of improving the power efficiency by utilizing the low-torque and high rotational speed range becomes more significant. Thus, the working machine can achieve improved work efficiency while accomplishing improved power efficiency.
(4) The rotating member C, which is driven by the electric motor 86, is one rotating member selected from the boom 58, the arm 60, and the attachment 62. The boom 58, the arm 60, and the attachment 62 are subject to different loads depending on the specific details of the work to be done by the working machine. Accordingly, the required range of the speed-torque characteristics tends to broaden. In addition, depending on the specific details of the work to be done by the working machine, the power consumption of the members such as the boom 58, the arm 60 and the attachment 62 may account for a large percentage of the total power consumption of the working machine. Since the drive units for the boom 58, the arm 60, and the attachment 62 employ the electric motor 86 with the switching circuit 104, the work efficiency and power efficiency can be improved.
(5) The drive system 100 includes the lower body 14 and the upper body 16. The lower body 14 has the traveling units 30. The upper body 16 is rotatably connected to the lower body 14. The rotating member C is the upper body 16. The upper body 16 can slew relative to the lower body 14, and the rotatable range tends to be broad. Accordingly, the use of the electric motor 86 with the switching circuit 104 can lead to improvement of the work efficiency and power efficiency.
(6) The drive system 100 includes the changeover switch 116 and the control device 106. The changeover switch 116 can be operated by the operator of the working machine. The control device 106 can switch the switching circuit 104 between the first connection state and the second connection state, based on how the changeover switch 116 is operated. With such a configuration, the operator can switch the electric motor 86 between the first connection state and the second connection state, by operating the changeover switch 116. The operation desired by the operator can be easily realized. Therefore, the use of the electric motor 86 is likely to improve the work efficiency.
(7) The drive system 100 includes the control device 106 configured to switch the switching circuit 104 to (i) the first connection state if the torque of the electric motor 86 is no less than the predetermined specified value and (ii) the second connection state if the torque of the electric motor 86 is less than the specified value.
   While the working machine is operating, the required torque may change. For example, during excavation work, higher torque is required in a case where the attachment 62 is in contact with hard bedrock as compared with a case where soft soil is excavated. By using the electric motor 86 to which the switching circuit 104 is applied as in the above embodiment, the working machine can maintain high power efficiency while producing high torque when the torque of the electric motor 86 becomes high. Thus, the working machine can achieve improved work efficiency while accomplishing improved power efficiency.
(8) The drive system 100 includes the control device 106 configured to switch the switching circuit 104 to (i) the second connection state if the rotational speed of the electric motor 86 is no less than the predetermined specified rotational speed and (ii) the first connection state if the rotational speed of the electric motor 86 is less than the specified rotational speed. While the working machine is operating, the required rotational speed may change. For example, the working machine may hold and move an object. When the working machine holds an object and releases the holding of the object, the electric motor 86 is required to operate at low rotational speed to perform accurate positioning. When the working machine is moving the object, on the other hand, the electric motor 86 is required to operate at high rotational speed for swift movement. By using the electric motor 86 to which the switching circuit 104 is applied as in the above embodiment, the working machine can maintain high power efficiency while achieving high rotational speed when the rotational speed of the electric motor 86 becomes high. Thus, the working machine can achieve improved work efficiency while accomplishing improved power efficiency.
(9) The rotating member C is the boom 58. The control device 106 configured to switch the switching circuit 104 to the first connection state if the angle of the boom 58 as a rotating member C relative to the ground surface G is less than the specified angle. The control device 106 configured to switch the switching circuit 104 to the second connection state if the angle of the boom 58 as a rotating member C relative to the ground surface G is no less than the specified angle. As the angle of the boom 58 relative to the ground surface G decreases, i.e., as the boom 58 becomes closer to being parallel to the ground surface G, the torque required to drive the boom 58 increases. On the other hand, as the angle of the boom 58 relative to the ground surface G increases, i.e., as the boom 58 becomes closer to being vertical to the ground surface G, the torque required to drive the boom 58 decreases. The boom 58 has a large longitudinal dimension, and its front end is subjected to forces from the weight of the arm 60 and the attachment 62. Therefore, the torque required to drive the boom 58 is likely to vary depending on the angle. Thus, the working machine can achieve improved work efficiency while accomplishing improved power efficiency by performing control based on the angle of the boom 58.
(10) The working machine includes the control device 106 that can keep the switching circuit 104 in the first connection state until the rotating member C rotates through the predetermined specified angle from the state where the rotating member C is stopped. In the working machine, high torque is required at the start of rotation of the rotating member C from a stationary state and in the early stages of the rotation. The working machine can achieve improved work efficiency and power efficiency by keeping the switching circuit 104 in the first connection state until the rotating member C rotates through the predetermined specified angle from the stationary state.
(11) The drive system 100 includes the converter circuit 82 and the air-cooled cooling device. The converter circuit 82 outputs AC power to the electric motor 86. The cooling device cools the converter circuit 82.

Using the switching circuit 104 relating to the above embodiment can result in reducing the burden on the converter circuit 82, as compared to the case where the torque and speed of the motor are changed by controlling the current supplied to the motor. Consequently, overheating of the converter circuit 82 can be reduced. The air-cooled cooling device, which has lower cooling efficiency than a water-cooled cooling device, can sufficiently cool the converter circuit 82.

### [Modification Examples]

The above embodiment can be modified as described below. The embodiment and one or more of the following modification examples may be implemented in combination with one another to the extent that they are not technically inconsistent.

The drive system 100 is only required to include at least one electric motor selected from the first to sixth electric motors 86A to 86F. In other words, at least one actuator selected from the first to sixth actuators 84A to 84F may be configured to be driven by the electric motor 86.

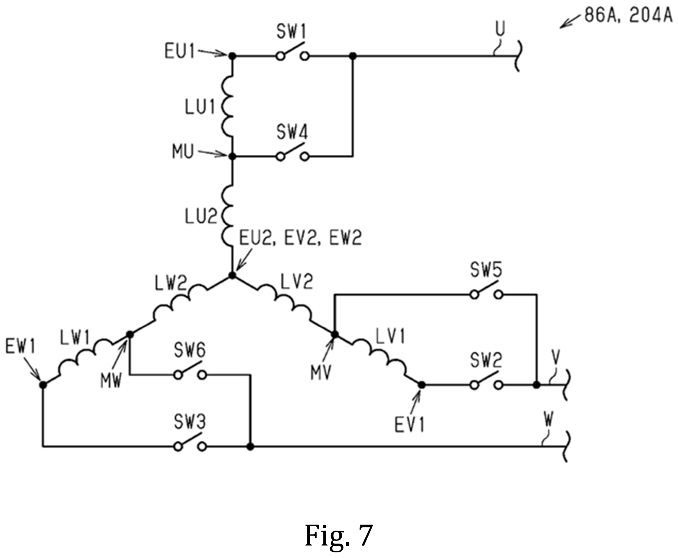

The switching circuit 104 can be configured in any other manner as needed. In one example, a first switching circuit 204A shown in Fig. 7 is different from the first switching circuit 104A shown in Fig. 5 in terms of how the first to sixth switches SW1 to SW6 are arranged. The first end of the first switch SW1 is connected to the U-phase wire U. The second end of the first switch SW1 is connected to the U-phase first end EU1 of the U-phase winding LU. The first end of the second switch SW2 is connected to the V-phase wire V. The second end of the second switch SW2 is connected to the V-phase first end EV1 of the V-phase winding LV. The first end of the third switch SW3 is connected to the W-phase wire W. The second end of the third switch SW3 is connected to the W-phase first end EW1 of the W-phase winding LW.

The first end of the fourth switch SW4 is connected to the U-phase wire U. In other words, the U-phase wire U is branched into the first switch SW1 and the fourth switch SW4, with the first end of the first switch SW1 and the first end of the fourth switch SW4 being the point of branching. The second end of the fourth switch SW4 is connected to the U-phase intermediate point MU. The first end of the fifth switch SW5 is connected to the V-phase wire V. In other words, the V-phase wire V is branched into the second switch SW2 and the fifth switch SW5, with the first end of the second switch SW2 and the first end of the fifth switch SW5 being the point of branching. The second end of the fifth switch SW5 is connected to the V-phase intermediate point MV. The first end of the sixth switch SW6 is connected to the W-phase wire W. In other words, the W-phase wire W is branched into the third switch SW3 and the sixth switch SW6, with the first end of the third switch SW3 and the first end of the sixth switch SW6 being the point of branching. The second end of the sixth switch SW6 is connected to the W-phase intermediate point MW.

Like the first switching circuit 104A, the first switching circuit 204A is switchable between the first connection state and second connection state. When the first switching circuit 204A is in the first connection state, the first, second and third switches SW1, SW2, and SW3 are in the conducting state, and the fourth, fifth and sixth switches SW4, SW5 and SW6 are in the disconnection state. When the first switching circuit 204A is in the second connection state, the first, second and third switches SW1, SW2, and SW3 are in the disconnection state, and the fourth, fifth and sixth switches SW4, SW5 and SW6 are in the conducting state.

When the first switching circuit 204A is in the first connection state, the windings from the first end to the second end of the winding of each phase are responsible for driving the first electric motor 86A. Specifically, as for the U-phase winding LU, the U-phase first winding LU1 and U-phase second winding LU2 are responsible for driving the first electric motor 86A. As for the V-phase winding LV, the V-phase first winding LV1 and V-phase second winding LV2 are responsible for driving the first electric motor 86A. As for the W-phase winding LW, the W-phase first winding LW1 and W-phase second winding LW2 are responsible for driving the first electric motor 86A.

When the first switching circuit 204A is in the second connection state, the winding from the intermediate point to the second end of the winding of each phase is responsible for driving the first electric motor 86A. Specifically, as for the U-phase winding LU, the U-phase second winding LU2 is responsible for driving the first electric motor 86A. As for the V-phase winding LV, the V-phase second winding LV2 is responsible for driving the first electric motor 86A. As for the W-phase winding LW, the W-phase second winding LW2 is responsible for driving the first electric motor 86A.

Stated differently, when the first switching circuit 204A is in the first connection state, the number of turns of the windings used to drive the first electric motor 86A is greater than when it is in the second connection state. Therefore, when the first switching circuit 204A is in the first connection state, the first electric motor 86A operates in the high torque range. Stated differently, when the first switching circuit 204A is in the second connection state, the number of turns of the windings used to drive the first electric motor 86A is less than when it is in the first connection state. When the first switching circuit 204A is in the second connection state, the first electric motor 86A operates in the high rotational speed range.

The method of switching the electric motor 86 between the high torque and high rotational speed ranges is not limited to changing the number of turns of the windings. In one example, the drive system 100 can employ a method of switching the manner of connecting the windings of each phase between series and parallel. In other words, the electric motor 86 can be switched between the high torque and high rotational speed ranges by the switching circuit switching the connection of the windings of each phase of the electric motor 86 between series and parallel.

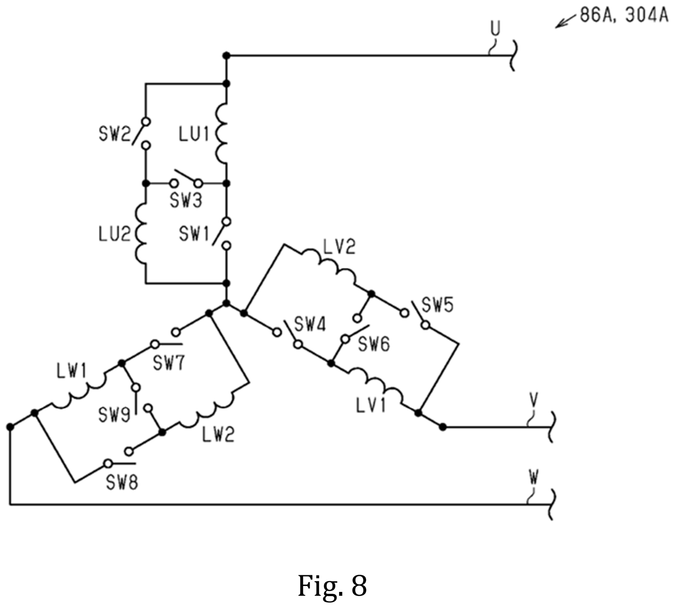

Fig. 8 shows a first switching circuit 304A and the first electric motor 86A, which are configured to achieve the switching between the high torque and high rotational speed ranges by switching the connection between series and parallel. As shown in Fig. 8, the first electric motor 86A has a U-phase first winding LU1 and a U-phase second winding LU2, a V-phase first winding LV1 and a V-phase second winding LV2, and a W-phase first winding LW1 and a W-phase second winding LW2. The first switching circuit 304A includes a first switch SW1, a second switch SW2, a third switch SW3, a fourth switch SW4, a fifth switch SW5, a sixth switch SW6, a seventh switch SW7, an eighth switch SW8, and a ninth switch SW9.

The first switch SW1 is connected in series with the U-phase first winding LU1. The U-phase first winding LU1 is located closer to the U-phase wire U than the first switch SW1. The second switch SW2 is connected in series with the U-phase second winding LU2. The second switch SW2 is located closer to the U-phase wire U than the U-phase second winding LU2.

The first switch SW1 and U-phase first winding LU1 are connected in parallel with the second switch SW2 and U-phase second winding LU2. The third switch SW3 establishes connection between (i) the first switch SW1 and the U-phase first winding LU1 and (ii) the second switch SW2 and the U-phase second winding LU2.

The fourth switch SW4 is connected in series with the V-phase first winding LV1. The V-phase first winding LV1 is located closer to the V-phase wire V than the fourth switch SW4. The fifth switch SW5 is connected in series with the V-phase second winding LV2. The fifth switch SW5 is located closer to the V-phase wire V than the V-phase second winding LV2.

The fourth switch SW4 and V-phase first winding LV1 are connected in parallel with the fifth switch SW5 and V-phase second winding LV2. The sixth switch SW6 establishes connection between (i) the fourth switch SW4 and the V-phase first winding LV1 and (ii) the fifth switch SW5 and the V-phase second winding LV2.

The seventh switch SW7 is connected in series with the W-phase first winding LW1. The W-phase first winding LW1 is located closer to the W-phase wire W than the seventh switch SW7. The eighth switch SW8 is connected in series with the W-phase second winding LW2. The eighth switch SW8 is located closer to the W-phase wire W than the W-phase second winding LW2.

The seventh switch SW7 and W-phase first winding LW1 are connected in parallel with the eighth switch SW8 and W-phase second winding LW2. The ninth switch SW9 establishes connection between (i) the seventh switch SW7 and the W-phase first winding LW1 and (ii) the eighth switch SW8 and the W-phase second winding LW2.

The first switching circuit 304A is switchable between the first connection state and the second connection state. When the first switching circuit 304A is in the first connection state, the first, second, fourth, fifth, seventh and eighth switches SW1, SW2, SW4, SW5, SW7 and SW8 are in the disconnection state, and the third, sixth and ninth switches SW3, SW6 and SW9 are in the conducting state. In the first connection state, the U-phase first winding LU1 and U-phase second winding LU2 are connected in series, and the V-phase first winding LV1 and V-phase second winding LV2 are connected in series, and the W-phase first winding LW1 and W-phase second winding LW2 are connected in series.

When the first switching circuit 304A is in the second connection state, the first, second, fourth, fifth, seventh and eighth switches SW1, SW2, SW4, SW5, SW7 and SW8 are in the conducting state, and the third, sixth and ninth switches SW3, SW6 and SW9 are in the disconnection state. In the second connection state, the U-phase first winding LU1 and U-phase second winding LU2 are connected in parallel, and the V-phase first winding LV1 and V-phase second winding LV2 are connected in parallel, and the W-phase first winding LW1 and W-phase second winding LW2 are connected in parallel.

When the first switching circuit 304A is in the first connection state, that is to say, the windings of each phase are connected in series, the first electric motor 86A operates in the high torque range. When the first switching circuit 304A is in the second connection state, that is to say, the windings of each phase are connected in parallel, the first electric motor 86A operates in the high rotational speed range.

The switching circuits 104 can be arranged in any other manner as needed. Each of the switching circuits 104 may be arranged in the corresponding one of the converter circuits 82. In other words, the switches of each switching circuit 104 may be located in the corresponding converter circuit 82. Alternatively, each switching circuit 104 may be located between the corresponding converter circuit 82 and the motor 86 with which the converter circuit 82 is associated.

The rotatable range of the rotating member C about the connection portion may not need to be 180 degrees or more. More specifically, the rotatable range of the swing bracket 5 relative to the main body 122 may be less than 180 degrees. The rotatable range of boom 58 relative to the main body 12 may be less than 180 degrees. The rotatable range of the arm 60 relative to the boom 58 may be less than 180 degrees. The rotatable range of the attachment 62 relative to the arm 60 may be less than 180 degrees.

The working machine is not limited to the excavator 10. The working machine may be, for example, a crane. The configuration of the working member 50 may be changed as the working machine is changed. In one example, the working member 50 can be configured without the swing bracket 52. In this case, the boom 58 may be connected to the main body 12. The working member 50 can be configured without the boom 58. In this case, the arm 60 may be connected to the swing bracket 52. The working member 50 can be configured without the arm 60. In this case, the attachment 62 may be connected to the boom 58.

The configuration of the main body 12 can be changed as needed. The lower body 14 and the upper body 16 of the main body 12 may be formed as a single piece. The upper body 16 may not need to be rotatably connected to the lower body 14. In this case, the fifth actuator 84E and slewing bearing 22 may be omitted. Furthermore, the lower body 14 may not include the traveling units 30. In this case, the sixth actuator 84F may be omitted.

The shape of the upper body 16 can be changed as needed. For example, the upper body 16 may not have a cabin for accommodating an operator. In other words, the excavator 10 may operate based on operation signals received from outside the vehicle body. The casing front portion 20 may be offset toward one side in the Y direction with respect to the casing main portion 18. The excavator 10 can be configured without the casing front portion 20. In this case, the swing bracket 52 may be attached to the casing main portion 18. The boom 58 may be attached to the casing main portion 18.

The traveling units 30 may be configured using other components than the traveling crawler 32 and the traveling mechanism 34. For example, the traveling units 30 may include a plurality of wheels. In this case, the sixth actuator 84F may be connected to a driver wheel from among the wheels.

The control device 106 can be configured without the changeover switch 116. The drive system 100 may change the connection state of the switching circuit 104 based on the information received from the sensors.

The configuration of the cooling devices 102A to 102F can be changed as needed. The cooling devices 102A to 102F may be water-cooled or employ a hybrid of water- and air-cooled systems. The drive system 100 may be practiced without the cooling devices 102A to 120F.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions are distributively provided. Some or all of the functions may be integrated. Any one of the functions may be partly or entirely segmented into a plurality of functions, which are distributively provided. Irrespective of whether the functions are integrated or distributed, they are acceptable as long as they are configured to attain the object of the invention.

The foregoing description is merely illustrative. In addition to the constituent elements and methods (manufacturing processes) described for the purpose of describing the technology of the present disclosure, numerous possible combinations and substitutions will be apparent to the person skilled in the art. The present disclosure is intended to encompass all alternatives, variations, and modifications within the scope of the disclosure, including the claims.

## Claims

1. A drive system of a working machine, the drive system comprising:
a rotating member configured to rotate relative to a connection portion; and
an electric motor configured as a source of power for the rotating member,
wherein the electric motor has a plurality of windings connected to an AC power source, and
wherein the drive system comprises a switching circuit configured to switch a connection state of the windings between a first connection state and a second connection state in which the electric motor rotates at lower torque and higher rotational speed than in the first connection state.

2. The drive system of claim 1,
wherein each of the windings has: a first end connected to the AC power source; a second end opposite the first end; and an intermediate point between the first and second ends, and
wherein the switching circuit is switchable between (i) the first connection state in which the intermediate points of the windings are disconnected from each other and the second ends of the windings are connected to each other and (ii) the second connection state in which the intermediate points of the windings are connected to each other.

3. The drive system of claim 1 or 2, wherein a rotatable range of the rotating member about the connection portion is 180 degrees or more.

4. The drive system of claim 1 to 3, comprising:
a main body;
a boom rotatably connected to the main body;
an arm rotatably connected to the boom; and
an attachment rotatably connected to the arm,
wherein the rotating member is one rotatable member selected from the boom, the arm, and the attachment.

5. The drive system of claim 1 to 3, comprising:
a lower body having a traveling unit; and
an upper body rotatably connected to the lower body,
wherein the rotating member is the upper body.

6. The drive system of claim 1 to 5, comprising:
a changeover switch configured to be operable by an operator of the working machine; and
a control device configured to switch the switching circuit between the first connection state and the second connection state, based on how the changeover switch is operated.

7. The drive system of claim 1 to 5, comprising
a control device configured to switch the switching circuit to (i) the first connection state if torque of the electric motor is no less than a predetermined specified value and (ii) the second connection state if the torque of the electric motor is less than the specified value.

8. The drive system of claim 1 to 5, comprising
a control device configured to switch the switching circuit to (i) the second connection state if rotational speed of the electric motor is no less than a predetermined specified rotational speed and (ii) the first connection state if the rotational speed of the electric motor is less than the specified rotational speed.

9. The drive system of claim 4,
wherein the rotating member is the boom, and
wherein the drive system comprises a control device configured to switch the switching circuit to (i) the first connection state if an angle of the boom relative to a ground surface is less than a specified angle and (ii) the second connection state if the angle of the boom relative to the ground surface is no less than the specified angle.

10. The drive system of claim 1 to 5, comprising
a control device configured to keep the switching circuit in the first connection state until the rotating member rotates through a predetermined specified angle from a stationary state.

11. The drive system of claim 1 to 10, comprising:
a converter circuit configured to output AC power to the electric motor; and
a cooling device configured to cool the converter circuit.
